# NEUE EUROPÄISCHE PATENTSCHRIFT

(11) **EP 3 034 191 B2**
(45) Veröffentlichungstag und Bekanntmachung des Hinweises auf die Entscheidung über den Einspruch: **26.01.2022**
(45) Hinweis auf die Patenterteilung: 01.02.2017
(21) Anmeldenummer: 14199470.7
(22) Anmeldetag: 19.12.2014
(51) Int. Cl.: B21D 5/08, B21D 35/00, B21D 22/26

(54) **Vorrichtung und Verfahren zur Herstellung eines länglichen Profilteils**
Device and method for producing an elongated profile
Dispositif et procédé de fabrication d'un élément de profil longitudinal

(43) Veröffentlichungstag der Anmeldung: 22.06.2016
(73) Patentinhaber: Voestalpine Krems GmbH, 3500 Krems an der Donau (AT)
(72) Erfinder: Rouet, Christian, 1140 Wien (AT)
(74) Vertreter: Jell, Friedrich

(56) Entgegenhaltungen:
- EP-A1- 1 537 922
- EP-A1- 2 875 877
- EP-B1- 1 344 583
- EP-B1- 2 225 055
- DE-A1- 10 011 755
- US-A- 5 237 846

## Beschreibung

Die Erfindung betrifft eine Vorrichtung und ein Verfahren zur Herstellung eines länglichen Profilteils, bei dem aus einem flachen Band, insbesondere Metallband, durch Walzen ein profiliertes Band erzeugt und das profilierte Band abschnittsweise geprägt wird, wodurch mindestens ein Längsabschnitt des profilierten Bands gegenüber mindestens einen anderen Längsabschnitt in einer Richtung senkrecht zur Längserstreckung des profilierten Bands versetzt wird, und bei welchem Verfahren das Band derart besäumt wird, dass nach dem Prägen die gegeneinander versetzten Längsabschnitte unterschiedliche Querschnitte aufweisen.

Zur Herstellung eines länglichen Profilteils mit einem Höhenversatz und unterschiedlichen Querschnitten im Profillängsverlauf ist es aus dem Stand der Technik bekannt (EP1344583B1), ein flaches Metallband zuerst zu profilieren, dann abschnittsweise zu prägen und abschließend zu besäumen. Durch das abschnittsweise Prägen werden im profilierten Band zwei seiner Längsabschnitte in einer Richtung senkrecht zur Längserstreckung versetzt - also ein Höhenversatz zwischen den Längsabschnitten im länglichen Profilteil erzeugt, wobei das in Durchlaufrichtung des Bands nach dem Prägen durchgeführte Besäumen für die unterschiedlichen Querschnitte am profilierten und geprägten Band sorgt. Nachteilig erfordert der Schritt des Besäumens insbesondere eine hohe Genauigkeit in der Positionierung und Abstützung des Profilteils gegenüber einem Trennwerkzeug, um die Formgenauigkeit am länglichen Profilteil sicherstellen zu können. Fertigungstoleranzen beim Besäumen haben daher erhöhten Einfluss auf die Reproduzierbarkeit des Verfahrens. Zudem erfordern die Prägewerkzeuge zum Versetzen der Längsabschnitte vergleichsweise hohe Prägekräfte, was die Energieeffizienz des Verfahrens vermindert und zusammen mit einem erhöhten Werkzeugverschleiß die Verfahrenskosten erhöht. Auch ist es auf diese Weise erforderlich, eine Schwächung der Standfestigkeit des länglichen Profilteils aufgrund von Materialabtrag vom profilierten Band in Kauf zu nehmen.

Die Erfindung hat sich daher ausgehend vom Eingangs geschilderten Stand der Technik die Aufgabe gestellt, ein Verfahren zur Herstellung eines länglichen Profilteils zu vereinfachen und damit in seiner Reproduzierbarkeit zu verbessern. Außerdem soll das Verfahren energieeffizienter und kostengünstiger anwendbar sein und die Herstellung hoch belastbarer länglicher Profilteile ermöglichen.

Wird das flache Band vor dem Profilieren derart besäumt dass durch das Prägen des besäumten und profilierten Bands die gegeneinander versetzten Längsabschnitte unterschiedliche Querschnitte aufweisen, kann der aus dem Stand der Technik bekannte vergleichsweise aufwendige Verfahrensschritt des Besäumens erheblich vereinfacht werden. Gemäß dem erfindungsgemäßen Verfahren kann das Besäumen - im Gegensatz zum Stand der Technik - nämlich vor einem Umformen, also vor dem Profilieren und Prägen, des flachen Bands vorgenommen werden. Somit muss beim Besäumen keine Rücksicht auf plastische Verformungen des Bands genommen werden, was das Besäumen verfahrensicher, relativ einfach und mit vergleichsweise hoher Fertigungsgenauigkeit durchführbar machen kann. Die Reproduzierbarkeit des Verfahrens ist derart erheblich erhöhbar. Zudem ist es auch möglich, durch das Besäumen des flachen Bands vor dessen Umformen, also vor dem Profilieren und Prägen, den diesbezüglich erforderlichen Kraft- und Energieaufwand zu reduzieren. Dies kann demnach ein Beitrag zur Verminderung von Verschleiß des Prägewerkzeugs, aber auch zur Erhöhung der Energie- und Kosteneffizienz des Verfahrens leisten.

Die Gefahr eines Verzugs beim Profilieren und Prägen des Bands kann vermindert werden, wenn das flache Band an seinen beiden Bandlängskanten besäumt wird. Dies umso mehr, wenn das Band an seinen beiden Bandlängskanten gleich besäumt wird und sich damit durch symmetrische Eigenschaften die Umformbedingungen über die Bandbreite und -länge vergleichmäßigen können.

Die Handhabung des Verfahrens kann sich weiter erleichtern, wenn das flache Band durch Zerteilen, insbesondere Stanzen, oder durch Abtragen, insbesondere Laserschneiden, besäumt wird.

Der Prägeschritt kann in der Handhabung zusätzlich vereinfacht werden, wenn das flache und besäumte Band durch Walzen zumindest in Längserstreckung abschnittsweise zu einem Hutprofil profiliert wird. Die Flansche des Hutprofils können nämlich als Auflageflächen für einen Niederhalter dienen, um das Prägen weiter zu unterstützen.

Vorzugsweise wird das Band ausschließlich in seinen unbesäumten Längsbereichen zu einem Hutprofil profiliert, um das abschnittsweise Prägen des profilierten Bands zur Schaffung des versetzten Längsabschnitts nicht zu gefährden.

Wird das profilierte Band beim Prägen in Längserstreckung durchgehend zu einem Hutprofil umgeformt, kann das Verfahren zur Herstellung eines Profilteils mit längsseitig verlaufenden Flanschen beschleunigt werden.

Zur Verringerung der Presskraft beim Prägen kann das Prägen des profilierten Bands in mehreren Prägeschritten erfolgt. Auf diese Weise ist zudem eine Schonung des Prägewerkzeugs möglich - womit durch das Verfahren Profilteile zuverlässiger und in weiterer Folge günstiger herstellbar sind.

Werden beim Endprägen zumindest bereichsweise über die Längsabschnitte verlaufende Flansche eingeprägt, kann auf einfache Weise ein besonders geradliniger Flanschabschluss an den Längsseiten des Profilteils erreicht werden. Derart ist es auf erleichtert möglich, am vorgeprägten Band beim Endprägen die Flansche der gegeneinander versetzten Längsabschnitte einfach aneinander anzugleichen. Dies kann zudem die Formgebung durch vorangegangene Prägeschritte stabilisieren und so zu einem formgenauen Profilteil führen, was die Reproduzierbarkeit des Verfahrens verbessern kann.

Die Formgenauigkeit am länglichen Profilteil kann weiter verbessert werden, indem erfindungsgemäß das profilierte Band beim Prägen beidseitig auf Zug in Längserstreckung belastet wird. Beispielsweise kann damit die Gefahr einer Wellenbildung im Profilteil reduziert werden.

Ein kontinuierliches Verfahren kann geschaffen werden, wenn vom mehrmals besäumten und mehrmals geprägten Band mehrere längliche Profilteile abgetrennt werden. Vorzugsweise ein Abschneiden kann hier eine spanfreie Trennung ermöglichen.

Vorzugsweise wird nach dem Prägen des Bands das längliche Profilteil abgetrennt, um ein kontinuierliches Verfahren unter Verwendung eines endlosen Bands zu schaffen.

Das erfindungsgemäße Verfahren kann in der Formgenauigkeit des Profilteils deutlich verbessert werden, wenn zur Kompensation einer Abweichung einer gemessenen Ist-Geometrie zu einer vorgegebenen Soll-Geometrie am länglichen Profilteil der Verlauf der Schnittlinie beim Besäumen des Bands verändert wird.

Die Erfindung hat sich außerdem die Aufgabe gestellt, eine Vorrichtung zur Herstellung eines länglichen Profilteils aus einem flachen Band der eingangs geschilderten Art derart zu konstruktiv zu verändern, dass diese standfest, schnell und kostengünstig ein Profilteil herstellen kann.

Die Erfindung löst die gestellte Aufgabe hinsichtlich der Vorrichtung durch die Merkmale des Anspruchs 11.

Ist die Besäumeinrichtung in Durchlaufrichtung des Bands vor der Profilierungseinrichtung angeordnet, kann aufgrund des damit reduzierten Materials bei den nachfolgenden Einrichtungen zum Umformen, nämlich an der Profilierungs- bzw. Prägeeinrichtung, eine Kraftreduktion erreicht und damit die Vorrichtung in der Standfestigkeit verbessert werden. Außerdem kann bei einem flachen Band ein äußerst exaktes Besäumen möglich sein, was formgenau hergestellte Profilteile ermöglichen kann. Ist die Besäumeinrichtung außerdem derart zum Besäumen des Bands ausgebildet, dass durch das Prägen des besäumten und profilierten Bands die gegeneinander versetzten Längsabschnitte unterschiedliche Querschnitte aufweisen, kann die Vorrichtung besonders kompakt und kostengünstig ausgebildet werden.

Eine kontinuierlich arbeitende Vorrichtung kann geschaffen werden, wenn die Vorrichtung eine in Durchlaufrichtung des Bands nach der Prägeeinrichtung vorgesehene Ablängeinrichtung zum Abtrennen von Profilteilen vom Band aufweist.

Die Gefahr, beim Prägen am Profilteil eine Welligkeit zu erzeugen, kann erheblich reduziert werden, wenn die Prägeeinrichtung mindestens zwei Niederhalter aufweist, mit denen das Band beim Prägen festgeklemmt und damit ein beidseitiger Längszug erzeugt werden kann. Konstruktiv vergleichsweise einfach kann dies gelöst werden, indem vom Prägewerkzeug entweder dessen Unter- oder Oberwerkzeug mit dem Niederhalter zusammenwirkt, das profilierte Band beim Prägen mit Hilfe des jeweils anderen, zwischen den beiden Niederhaltern bewegbaren Werkzeugs festzuklemmen.

Die Genauigkeit der Vorrichtung kann erhöht werden, wenn die Vorrichtung eine Regeleinrichtung und eine mit der Regeleinrichtung datenverbundene Messeinrichtung aufweist, mit der Messdaten zur Ist-Geometrie des länglichen Profilteils aufgenommen werden, wobei die Regeleinrichtung in Abhängigkeit eines Vergleichs der Messdaten mit vorgegebenen Daten zur Soll-Geometrie am länglichen Profilteil mit der Besäumeinrichtung zur Veränderung der Schnittlinie der Besäumeinrichtung datenverbunden ist, um Abweichungen der Ist-Geometrie zu vorgegebenen Soll-Geometrie am länglichen Profilteil zu kompensieren.

In den Figuren ist beispielsweise der Erfindungsgegenstand anhand einer Ausführungsvariante näher dargestellt. Es zeigen
- Fig. 1: eine Seitenansicht auf ein längliches Profilteil,
- Fig. 2: eine Schnittansicht nach II-II der Fig. 1
- Fig. 3: eine Schnittansicht nach III-III der Fig. 1,
- Fig. 4: eine schematische Ansicht auf eine Vorrichtung zur Herstellung des länglichen Profilteils nach Fig. 1,
- Fig. 5: eine teilweise aufgerissene Draufsicht auf die Vorrichtung nach Fig. 4,
- Fig. 6: eine teilweise aufgerissene Darstellung auf die Prägeeinrichtung der Vorrichtung nach Fig. 4,
- Fig. 7a: eine Schnittansicht nach VI-VI der Fig. 6 und
- Fig. 7b: eine Schnittansicht zum nach Fig. 7a dargestellten geöffneten Niederhalter.

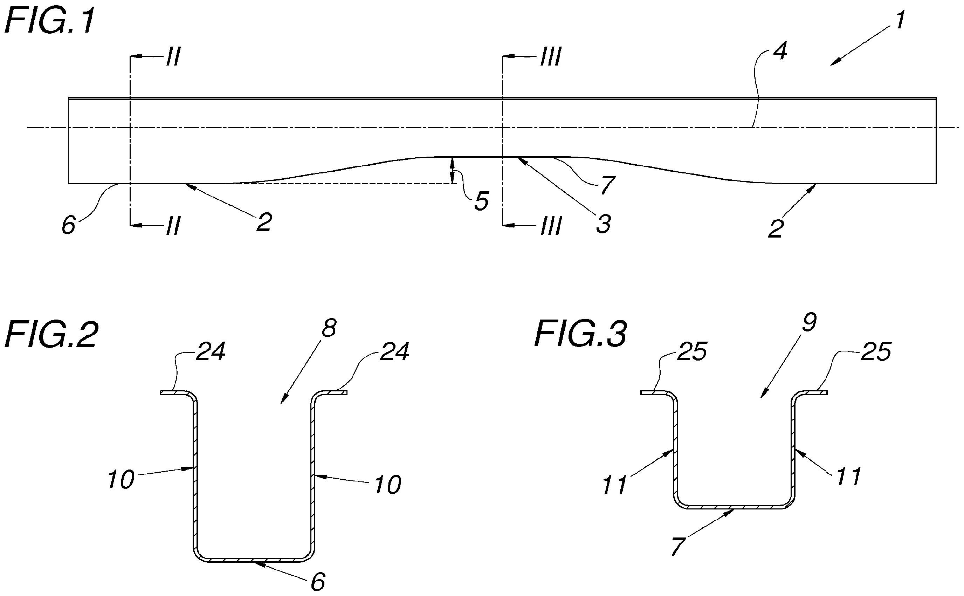

Entsprechend den Figuren 1, 2 und 3 wird beispielsweise ein mit dem erfindungsgemäßen Verfahren hergestelltes längliches Profilteil 1 gezeigt. Dieses längliche Profilteil 1 weist im wesentlichen zwei unterschiedliche Längsabschnitte 2, 3 mit einer U-Profilform auf - entsprechend den Figuren 2 und 3 dargestellt. Der mittlere Längsabschnitt 2 ist im Vergleich zu dessen benachbarten Längsabschnitten 3 in einer Richtung senkrecht zur Längserstreckung 4 des Profilteils 1 versetzt. In Fig. 1 ist der maximale Versatz 5 in Richtung senkrecht zur Längserstreckung 4 des Profilteils 1 eingezeichnet. Der Boden 7 des Längsabschnitts 3 schließt ausgehend von einem zu den Böden 6 der Längsabschnitt 2 parallelen mittigen Bodenverlauf über je zu den Böden 6 der Längsabschnitt 2 geneigte Bodenverläufe an diese Längsabschnitte 2 an. Dieser für den Längsabschnitt 3 gezeigte Bodenverlauf ist beispielsweise zu stehen, jeglicher Bodenverlauf, beispielsweise rechteckförmiger, V-förmig, etc. ist vorstellbar - wobei es bereits für die Erfindung ausreichend ist, wenn am Band 14 nur zwei gegeneinander versetzte Längsabschnitte 2 und 3 am Band 14 vorgesehen werden. Außerdem ist der in Fig. 2 dargestellte Querschnitt 8 der Längsabschnitte 2 zum in Fig. 3 dargestellten Querschnitt 9 des Längsabschnitts 3 zumindest in der Höhe der jeweiligen Schenkel 10, 11 unterschiedlich.

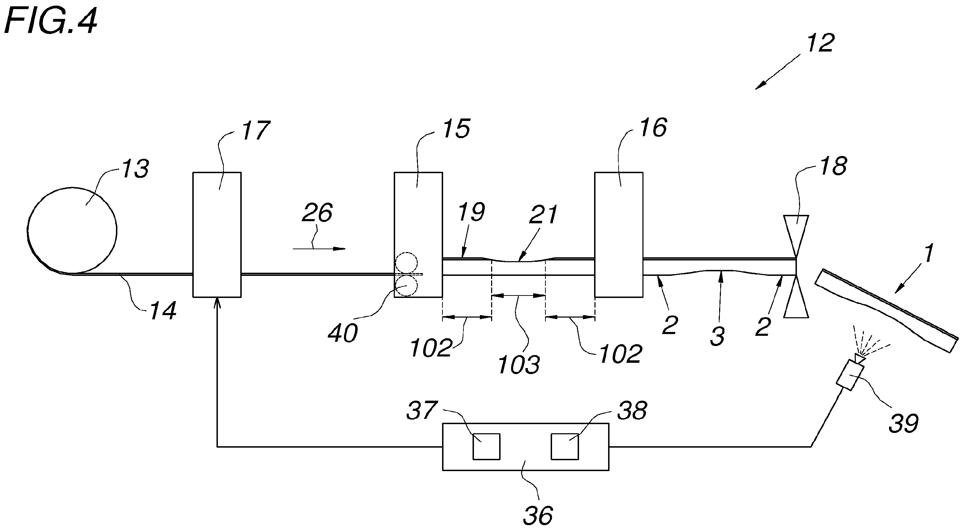

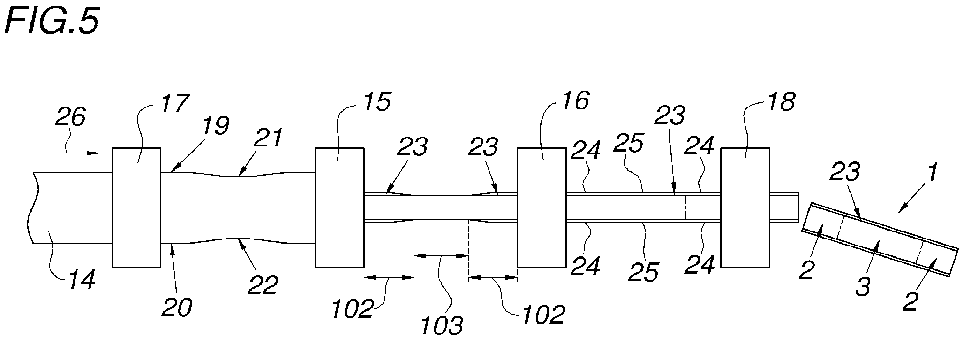

Dieses längliche Profilteil 1 wird mithilfe einer nach Fig. 4 schematisch dargestellten Vorrichtung 12 erzeugt. Hierzu wird von einem Coil 13 ein Band 14, nämlich Stahlband, abgehaspelt, walzprofiliert, abschnittsweise geprägt, besäumt und abgelängt - um damit in einem kontinuierlichen Verfahren mehrere längliche Profilteile 1 herzustellen. Die Vorrichtung 12 weist hierzu eine Profilierungseinrichtung 15, eine Prägeeinrichtung 16, eine Besäumeinrichtung 17 und eine Ablängeinrichtung 18 auf. Mit der Profilierungseinrichtung 15 wird das Band 14 profiliert, um dem länglichen Profilteil 1 im Wesentlichen die Querschnittsform zu geben. Mit der in Durchlaufrichtung 26 des Bands 14 nach der Profilierungseinrichtung 15 angeordneten Prägeeinrichtung 16 werden in das profilierte Band 14 die Längsabschnitte 2, 3 erzeugt, die in eine Richtung senkrecht zur Längserstreckung 4 des profilierten Bands 14 versetzt sind. Mit der Besäumeinrichtung 17 wird das Band 14 einem Trennverfahren zumindest abschnittsweise entlang wenigstens einer seiner Bandlängskanten 19, 20 unterworfen. Wie in Fig. 5 ersichtlich, erfolgt dies für das Band 14 entlang einer offenen Schnittlinie 21, 22. Mit der Ablängeinrichtung 18 werden aus dem endlosen Band 14 mehrere längliche Profilteile 1 abgetrennt.

Erfindungsgemäß wird nun im Gegensatz zum Stand der Technik das Besäumen des flachen Bands 14 vor der Profilierungseinrichtung 15 durchgeführt. Mit der in Durchlaufrichtung 26 des Bands 14 vor der Profilierungseinrichtung 15 angeordneten Besäumeinrichtung 17 wird das flache Band 14 vor dem Profilieren nun derart besäumt, dass durch das Prägen des besäumten und profilierten Bands 14 die gegeneinander versetzten Längsabschnitte 2, 3 unterschiedliche Querschnitte 8, 9 aufweisen. Dieses Besäumen des flachen Bands 14 mit einer offenen Schnittlinie 21, 22 kann durch Zerteilen, beispielsweise Stanzen und/oder Ausschneiden etc., oder durch Abtragen, beispielsweise durch Laserschneiden und/oder Wasserschneiden etc., erfolgen, was nicht näher dargestellt worden ist. Das flache Band 14 weist damit entlang seinen Bandlängskanten 19, 20 einen Konturenverlauf aus, der in dem versetzten Längsabschnitt 3 weniger Bandmaterial vorsieht. Dies deshalb, um einerseits den Kraftaufwand beim Prägen zu reduzieren, und auch, um nach dem Prägen den unterschiedlichen Querschnitt 9 in diesem Längsabschnitt 3 zu schaffen. Zudem sind beim Besäumen des flachen Bands 14 noch keine plastischen Formänderungen des Bands 14 zu berücksichtigen, was das Verfahren deutlich einfacher handhabbar und damit auch reproduzierbarer macht. Hohe Fertigungsgenauigkeit am hergestellten länglichen Profilteil 1 ist so erleichtert einzuhalten.

Wie in Fig. 5 zu erkennen, ist das längliche Profilteil 1 in Längserstreckung 4 gesehen symmetrisch aufgebaut, weil das flache Band 14 an dessen beiden Bandlängskanten 19, 20 gleich besäumt wird.

Mit der Profilierungseinrichtung 15 wird das flache und besäumte Band 14 mit nur andeutungsweise in Fig. 4 dargestellten Walzen 40 walzprofiliert, um durch dieses kontinuierliche Biegeverfahren die Grundform des länglichen Profilteils 1 kostengünstig herzustellen. Dabei wird das flache und besäumte Band 14 in Längserstreckung 4 abschnittsweise zu einem Hutprofil 23 bzw. Omegaprofil profiliert, und zwar in seinen unbesäumten Längsbereichen 102. Mit der Prägeeinrichtung 16 wird das sich in Längserstreckung 4 des Bands 14 erstreckende Hutprofil 23 vervollständigt - und zwar, indem das profilierte Band 14 beim Prägen in Längserstreckung 4 durchgehend zu einem Hutprofil umgeformt wird, vornehmlich in den besäumten Bereichen 103 des Bands 14.

Das Prägen des profilierten Bands 14 erfolgt mehrstufig. Hierzu weist die Prägeeinrichtung 16 nacheinander mehrere Pressen mit zusammenwirkenden Werkzeugen auf - was nicht näher dargestellt worden ist. Der erforderliche Kraftaufwand für die jeweiligen Prägestufen der Prägeeinrichtung 16 ist erfindungsgemäß weiter reduziert. Dies insbesondere, wenn beim Endprägen am vorgeprägten Band 14 zumindest bereichsweise über die Längsabschnitte 2, 3 verlaufende Flansche 24, 25 eingeprägt werden. Hierzu ist im Ausführungsbeispiel vorgesehen, das profilierte Band 14 beidseitig in Querrichtung des Bands 14 auf Zug in Längserstreckung 4 zu belasten, um einer eventuellen, über die Flansche 24, 25 verlaufenden Wellenbildung vorzubeugen. Auf diese Weise wird über die Flansche 24, 25 ein besonders gleichmäßiger Abschluss des Profils erreicht.

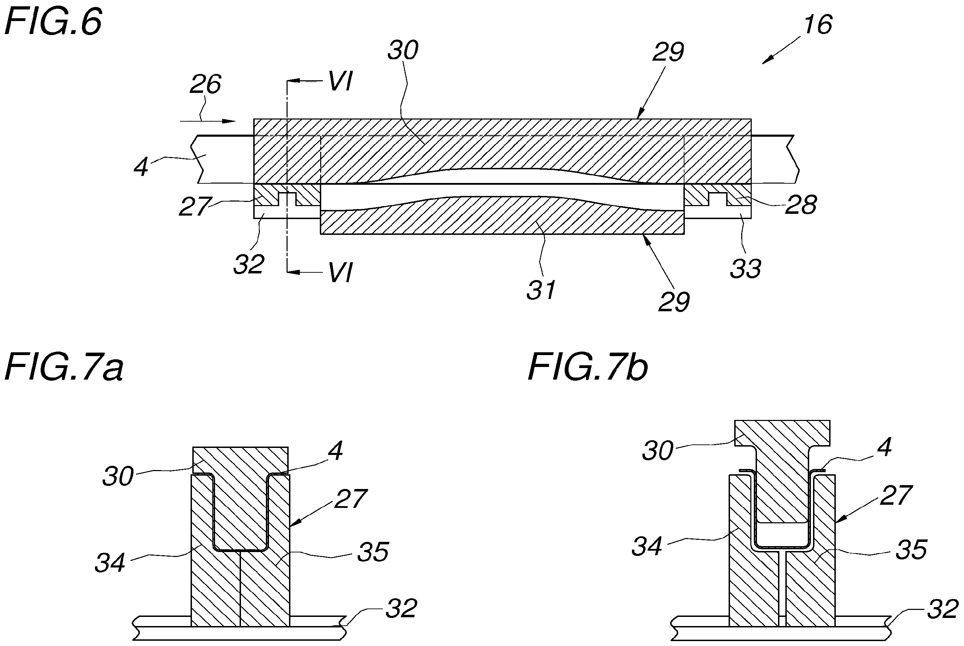

Entsprechend den Figuren 6, 7a und 7b wird die Prägeeinrichtung 16 näher dargestellt, die zwei Niederhalter 27, 28 und ein Prägewerkzeug 29 mit einem Oberwerkzeug 30 und Unterwerkzeug 31 aufweist.
Die Niederhalter 27, 28 wirken mit dem Oberwerkzeug 30 zusammen, um das Band 14 beim Prägen festzuklemmen, wie dies nach Fig. 6 und 7a zu erkennen ist. Hierzu drückt das Oberwerkzeugs 30 das Band 14 auf die Niederhalter 27 bzw. 28 und hält das Band 14 kraftschlüssig fest. Mit dem Schließen bzw. dem weiteren Schließen des Prägewerkzeugs 29 wird, indem das Unterwerkzeug 31 in Richtung des Oberwerkzeugs 30 bewegt wird, nun das Band 14 abschnittsweise geprägt - wie bereits vorstehend beschrieben. Durch das Festklemmen des Bands 14 kann beim Prägen ein Längszug auf das Band 14 ausgeübt werden, was Welligkeiten am Band 14 verhindert. Außerdem ist der Fig. 7 zu entnehmen, dass die Niederhalter 27, 28 aus zwei auf einer Führung 32, 33 quer zur Durchlaufrichtung 26 öffen- und schließbaren Backen 34, 35 besteht, wie dies im Vergleich zwischen Fig. 7a und 7b zu erkennen ist. Insbesondere ist in der Fig. 7b auch das Ein- und Ausfahren des Oberwerkzeugs 30 in den Niederhalter 27 zu erkennen.

Wie bereits beschrieben kann das Prägen des profilierten Bands 14 in mehreren Prägeschritten erfolgen. Hierzu können der Prägeeinrichtung 16 nacheinander mehrere Prägestufen, wie in Fig. 6 dargestellt, mit Niederhalter 27, 28 und Prägewerkzeug 29 zugeordnet sein, was nicht näher gezeigt worden ist.

Wie in Fig. 4 zudem zu erkennen, ist die Vorrichtung 12 mit einer Regeleinrichtung 36 ergänzt, um damit die Formgenauigkeit des damit hergestellten Profilteils 1 zu verbessern bzw. zu garantieren. Hierzu weist die Regeleinrichtung beispielsweise einen I-Regler (integrierender Regler, I-Glied) auf, um Regelabweichungen auszuschließen und damit eine vollständige Kompensation einer Abweichung der Ist-Geometrie am länglichen Profilteil 1 zu vorgegebenen Soll-Geometrie am länglichen Profilteil 1 sicherzustellen. Andere Regler bzw. Standardregler mit P-, PI-, PD- und PID-Verhalten sind denkbar.

Die Sollgeometrie am länglichen Profilteil ist der Regeleinrichtung 36 in Form von Daten 37 vorgegeben. Diese Daten 37 werden mit Messdaten 38 verglichen, die eine mit der Regeleinrichtung 36 zum Übertragen von Daten verbundene Messeinrichtung 39 vom fertigen Profilteil 1 aufnimmt. Diese Messeinrichtung 39 ist in der Fig. 4 als Kamera zur Aufnahme von Videodaten ausgeführt. Andere Meßeinrichtungen 39 sind denkbar, beispielsweise ein Laserscanner etc., um damit von der Ist-Geometrie des Profilteils 1 abgängige Messdaten erfassen zu können.

Eine Abweichung, die eine vorgegebene Fertigungstoleranz berücksichtigen kann, wird von der Regeleinrichtung 36 dahingehend kompensiert, dass für mindestens ein nachfolgendes Profilteil die Schnittlinie 21, 22 der Besäumeinrichtung 14 verändert wird. Hierzu ist die Regeleinrichtung 36 mit der Besäumeinrichtung 14 zur Übertragung von Daten verbunden, um damit die Ist-Geometrie noch nicht fertiggestellter Profilteile an die gewünschte Sollgeometrie weiter anzunähen bzw. damit in Übereinstimmung zu bringen. Toleranzen an der Vorrichtung 12 bzw. Fertigungstoleranzen am Band 14 können damit besonders schnell berücksichtigt bzw. ausgeglichen werden, was das Verfahren äußerst reproduzierbar und die Vorrichtung 12 standfest macht.

## Patentansprüche

1. Verfahren zur Herstellung eines länglichen Profilteils (1), bei dem aus einem flachen Band (14), insbesondere Metallband, durch Walzen ein profiliertes Band (14) erzeugt und das profilierte Band (14) abschnittsweise geprägt wird, wodurch mindestens ein Längsabschnitt (3) des profilierten Bands (14) gegenüber mindestens einen anderen Längsabschnitt (2) in einer Richtung senkrecht zur Längserstreckung (4) des profilierten Bands (14) versetzt wird, und bei welchem Verfahren das Band (14) derart besäumt wird, dass nach dem Prägen die gegeneinander versetzten Längsabschnitte (2, 3) unterschiedliche Querschnitte (8, 9) aufweisen, **dadurch gekennzeichnet, dass** das flache Band (14) vor dem Profilieren derart besäumt wird, dass durch das Prägen des besäumten und profilierten Bands (14) die gegeneinander versetzten Längsabschnitte (2, 3) unterschiedliche Querschnitte (8, 9) aufweisen, wobei das profilierte Band (14) beim Prägen beidseitig auf Zug in Längserstreckung (4) belastet wird.

2. Verfahren nach Anspruch 1, **dadurch gekennzeichnet, dass** das flache Band (14) an seinen beiden Bandlängskanten (19, 20), insbesondere gleich, besäumt wird.

3. Verfahren nach Anspruch 1 oder 2, **dadurch gekennzeichnet, dass** das flache Band (14) durch Zerteilen, insbesondere Stanzen, oder durch Abtragen, insbesondere Laserschneiden, besäumt wird.

4. Verfahren nach Anspruch 1, 2 oder 3, **dadurch gekennzeichnet, dass** das flache und besäumte Band (14) durch Walzen zumindest in Längserstreckung (4) abschnittsweise zu einem Hutprofil (23) profiliert wird.

5. Verfahren nach Anspruch 4, **dadurch gekennzeichnet, dass** das Band (14) ausschließlich in seinen unbesäumten Längsbereichen (102) zu einem Hutprofil (23) profiliert wird.

6. Verfahren nach einem der Ansprüche 1 bis 5, **dadurch gekennzeichnet, dass** das profilierte Band (14) beim Prägen in Längserstreckung (4) durchgehend zu einem Hutprofil (23) umgeformt wird.

7. Verfahren nach einem der Ansprüche 1 bis 6, **dadurch gekennzeichnet, dass** das Prägen des profilierten Bands (14) in mehreren Prägeschritten erfolgt.

8. Verfahren nach Anspruch 7, **dadurch gekennzeichnet, dass** beim Endprägen zumindest bereichsweise über die Längsabschnitte (2, 3) verlaufende Flansche (24, 25) eingeprägt werden.

9. Verfahren nach einem der Ansprüche 1 bis 8, **dadurch gekennzeichnet, dass** vom mehrmals besäumten und mehrmals geprägten Band (14) mehrere längliche Profilteile (1) abgetrennt werden.

10. Verfahren nach Anspruch 9, **dadurch gekennzeichnet, dass** zur Kompensation einer Abweichung einer gemessenen Ist-Geometrie zu einer vorgegebenen Soll-Geometrie am länglichen Profilteil (1) der Verlauf der Schnittlinie (21, 22) beim Besäumen des Bands (14) verändert wird.

11. Vorrichtung zur Herstellung eines länglichen Profilteils (1) aus einem flachen Band (14) mit einer Profilierungseinrichtung 15, die mindestens eine Walze (40) zum Profilieren des flachen Bands (14) aufweist, mit einer in Durchlaufrichtung (26) des Bands nach der Profilierungseinrichtung (15) angeordneten Prägeeinrichtung (16), die zumindest ein Prägewerkzeug (29) zum derart abschnittsweisen Prägen des profilierten Bands (14) aufweist, dass damit mindestens ein Längsabschnitt (3) des profilierten Bands (14) gegenüber mindestens einen anderen Längsabschnitt (2) in einer Richtung senkrecht zur Längserstreckung des profilierten Bands (14) versetzt wird, und mit einer Besäumeinrichtung (17), die derart zum Besäumen des Bands (14) ausgebildet ist, dass nach dem Prägen der Prägeeinrichtung (16) die gegeneinander versetzten Längsabschnitte (2, 3) unterschiedliche Querschnitte (8, 9) aufweisen, **dadurch gekennzeichnet, dass** die Besäumeinrichtung (17) in Durchlaufrichtung (26) des Bands (14) vor der Profilierungseinrichtung (15) angeordnet ist und derart zum Besäumen des Bands (14) ausgebildet ist, dass durch das Prägen des besäumten und profilierten Bands (14) die gegeneinander versetzten Längsabschnitte (2, 3) unterschiedliche Querschnitte (8, 9) aufweisen, wobei die Prägeeinrichtung (16) mindestens zwei Niederhalter (27, 28) aufweist, und dass vom Prägewerkzeug (29) entweder dessen Ober- oder Unterwerkzeug (30 oder 31) mit dem Niederhalter (27, 28) zusammenwirkt, das profilierte Band (14) beim Prägen mit Hilfe des jeweils anderen, zwischen den beiden Niederhaltern (27, 28) bewegbaren Werkzeugs (31 oder 30) festzuklemmen.

12. Vorrichtung nach Anspruch 11, **dadurch gekennzeichnet, dass** die Vorrichtung eine in Durchlaufrichtung (26) des Bands (14) nach der Prägeeinrichtung (16) vorgesehene Ablängeinrichtung (18) zum Abtrennen von Profilteilen (1) vom Band (14) aufweist.

13. Vorrichtung nach Anspruch 11 oder 12, **dadurch gekennzeichnet, dass** die Vorrichtung eine Regeleinrichtung (36) und eine mit der Regeleinrichtung (36) datenverbundene Messeinrichtung (39) aufweist, mit der Messdaten (38) zur Ist-Geometrie des länglichen Profilteils (1) aufgenommen werden, wobei die Regeleinrichtung (36) in Abhängigkeit eines Vergleichs der Messdaten (38) mit vorgegebenen Daten (37) zur Soll-Geometrie am länglichen Profilteil (1) mit der Besäumeinrichtung (14) zur Veränderung der Schnittlinie (21, 22) der Besäumeinrichtung (14) datenverbunden ist, um Abweichungen der Ist-Geometrie zu vorgegebenen Soll-Geometrie am länglichen Profilteil (1) zu kompensieren.

## Claims

1. Method for producing an elongate profile part (1), in which a profiled strip (14) is produced from a flat strip (14), in particular metal strip, by rolling and the profiled strip (14) is embossed in sections, by which means at least one longitudinal section (3) of the profiled strip (14) is offset with respect to at least one other longitudinal section (2) in a direction perpendicular to the longitudinal extension (4) of the profiled strip (14), and in which method the strip (14) is trimmed such that, after the embossing, the longitudinal sections (2, 3) which are offset with respect to each other have different cross-sections (8, 9) **characterized in that** the flat strip (14) is trimmed before profiling such that by embossing the trimmed and profiled strip (14) the longitudinal sections (2, 3) which are displaced in relation to each other have different cross-sections (8, 9), wherein the profiled strip (14) is loaded under tension on both sides in longitudinal extension (4) during the embossing.

2. The method according to claim 1, **characterized in that** the flat strip (14) is trimmed at its two longitudinal edges (19, 20), in particular equally.

3. The method according to claim 1 or 2, **characterized in that** the flat strip (14) is trimmed by separating, in particular stamping or by removal, in particular laser cutting.

4. The method according to claim 1, 2 or 3, **characterized in that** the flat and trimmed strip (14) is profiled by rolling, at least in longitudinal extension (4) in sections to form a hat profile (23).

5. The method according to claim 4, **characterized in that** the strip (14) is profiled to form a hat profile (23) exclusively in its untrimmed longitudinal regions (102).

6. The method according to any one of claims 1 to 5, **characterized in that** the profiled strip (14) is continuously formed to give a hat profile (23) by embossing in longitudinal extension (4).

7. The method according to any one of claims 1 to 6, **characterized in that** the embossing of the profiled strip (14) takes place in several embossing steps.

8. The method according to claim 7, **characterized in that** during the final embossing, flanges (24, 25) running over the longitudinal sections (2, 3) are embossed at least in some regions.

9. The method according to any one of claims 1 to 8, **characterized in that** a plurality of longitudinal profile parts (1) are separated from the strip (14) which has been trimmed multiple times and embossed multiple times.

10. The method according to claim 9, **characterized in that** the course of the cutting line (21, 22) is changed during trimming of the strip (14) in order to compensate for a deviation of a measured actual geometry from a predefined desired geometry of the profile parts (1).

11. Device for producing an elongate profile part (1) from a flat strip (14) comprising a profiling device (15) which comprises at least one roller (40) for profiling the flat strip (14), comprising an embossing device (16) arranged in the running direction (26) of the strip downstream of the profiling device (15), which has at least one embossing tool (29) for embossing the profiled strip (14) in sections in such a manner that at least one longitudinal section (3) of the profiled strip (14) is offset with respect to at least one other longitudinal section (2) in a direction perpendicular to the longitudinal extension of the profiled strip (14) and comprising a trimming device (17) which is configured in such a manner for trimming the strip (14) that after the embossing of the embossing device (16), the mutually offset longitudinal sections (2, 3) have different cross-sections (8, 9) **characterized in that** the trimming device (17) is arranged in the running direction (26) of the strip (14) upstream of the profiling device (15) and is configured in such a manner for trimming the strip (14) that by embossing the trimmed and profiled strip (14) the longitudinal sections (2, 3) which are displaced in relation to each other have different cross-sections (8, 9), wherein the embossing device (16) comprises at least two downholders (27, 28) and that of the embossing tool (29) either its upper or lower tool (30 or 31) interacts with the downholder (27, 28) to firmly clamp the profiled strip (14) during embossing with the aid of the respectively other tool (31 or 30) which is movable between the two downholders (27, 28).

12. The device according to claim 11, **characterized in that** the device has a cutting-to-length device (18) provided in the running direction (26) of the strip (14) downstream of the embossing device (16) for cutting to length profile parts (1) from the strip (14).

13. The device according to claim 11 or 12, **characterized in that** the device comprises a regulating device (36) and a measuring device (39) in data communication with the regulating device (36), with which measurement data (38) for the actual geometry of the elongated profile (1) are recorded, wherein the regulating device (36) is in data communication with the trimming device (14) for changing the cutting line (21, 22) of the trimming device (14) depending on a comparison of the measurement data (38) with predefined data (37) for the desired geometry on the elongated profile part (1) in order to compensate for deviations of the actual geometry from the predefined desired geometry on the elongated profile part (1).

## Revendications

1. Procédé pour la fabrication d'une pièce profilée allongée (1), dans lequel une bande (14) profilée est produite à partir d'une bande (14) plate, en particulier métallique, par laminage et la bande (14) profilée est estampée par parties, de sorte qu'au moins une partie longitudinale (3) de la bande (14) profilée est décalée par rapport à au moins une autre partie longitudinale (2) dans une direction perpendiculaire à la longueur (4) de la bande (14) profilée, et dans lequel la bande (14) est rognée de telle manière qu'après l'estampage, les parties longitudinales (2, 3) décalées l'une par rapport à l'autre présentent des sections (8, 9) différentes, **caractérisé en ce que** la bande (14) plate est rognée avant le profilage de telle manière que l'estampage de la bande (14) rognée et profilée donne aux parties longitudinales (2, 3) décalées l'une par rapport à l'autre des sections (8, 9) différentes, la bande (14) profilée étant soumise des deux côtés à une contrainte de traction dans sa longueur (4) lors de l'estampage.

2. Procédé selon la revendication 1, **caractérisé en ce que** la bande (14) plate est rognée sur ses deux bords longitudinaux (19, 20), de préférence de la même manière.

3. Procédé selon la revendication 1 ou 2, **caractérisé en ce que** la bande (14) plate est rognée par découpe, en particulier à l'emporte-pièce, ou par enlèvement de matière, en particulier par découpe au laser.

4. Procédé selon la revendication 1, 2 ou 3, **caractérisé en ce que** la bande (14) plate et rognée est profilée par sections par laminage au moins dans sa longueur (4) pour former un profilé chapeau (23).

5. Procédé selon la revendication 4, **caractérisé en ce que** la bande (14) est profilée exclusivement dans les zones non rognées (102) de sa longueur pour former un profilé chapeau (23).

6. Procédé selon l'une des revendications 1 à 5, **caractérisé en ce que** la bande (14) profilée est déformée de façon continue lors de l'estampage dans sa longueur (4) pour former un profilé chapeau (23).

7. Procédé selon l'une des revendications 1 à 6, **caractérisé en ce que** l'estampage de la bande (14) profilée est effectué en plusieurs étapes d'estampage.

8. Procédé selon la revendication 7, **caractérisé en ce que** lors de l'estampage final, des brides (24, 25) s'étendant au moins par zones sur les parties longitudinales (2, 3) sont formées par estampage.

9. Procédé selon l'une des revendications 1 à 8, **caractérisé en ce que** plusieurs pièces profilées allongées (1) sont découpées dans la bande (14) rognée plusieurs fois et estampée plusieurs fois.

10. Procédé selon la revendication 9, **caractérisé en ce qu'**afin de compenser un écart d'une géométrie réelle mesurée par rapport à une géométrie de consigne, le trajet de la ligne de coupe (21, 22) sur la pièce profilée allongée (1) est modifié lors du rognage de la bande (14).

11. Installation pour fabriquer une pièce profilée allongée (1) à partir d'une bande (14) plate avec un dispositif de profilage (15) qui comporte au moins un cylindre (40) pour profiler la bande (14) plate, avec un dispositif d'estampage (16) disposé après le dispositif de profilage (15) dans les sens de passage (26) de la bande, qui présente au moins un outil d'estampage (29) pour estamper au moins par zones la bande (14) profilée de telle manière qu'au moins une partie longitudinale (3) de la bande (14) profilée soit ainsi décalée par rapport à au moins une autre partie longitudinale (2) dans une direction perpendiculaire à la longueur de la bande (14) profilée, et avec un dispositif de rognage (17) qui est conçu pour rogner la bande (14) de telle manière qu'après l'estampage par le dispositif d'estampage (16), les parties longitudinales (2, 3) décalées l'une par rapport à l'autre présentent des sections (8, 9) différentes, **caractérisée en ce que** le dispositif de rognage (17) est disposé avant le dispositif de profilage (15) dans le sens de passage (26) de la bande (14) et conformé pour rogner la bande (14) de telle manière que l'estampage de la bande (14) rognée et profilée confère aux parties longitudinales (2, 3) décalées l'une par rapport à l'autre des sections (8, 9) différentes, dans lequel le dispositif d'estampage (16) ayant au moins deux organes de d'appui (27, 28) et **en ce que** l'outil supérieur ou l'outil inférieur (30 ou 31) de l'outil d'estampage (29) coopère avec l'organe d'appui (27, 28) pour pincer la bande (14) profilée à l'aide de l'autre outil (31 ou 30) qui peut être déplacé entre les deux organes d'appui (27, 28).

12. Installation selon la revendication 11, **caractérisée en ce qu'**elle comporte un dispositif de recoupe (18) disposé après le dispositif d'estampage (16) dans le sens de passage (26) de la bande (14) pour découper des pièces profilées (1) dans la bande (14).

13. Installation selon la revendication 11 ou 12, **caractérisée en ce qu'**elle comporte un dispositif de réglage (36) et un dispositif de mesure (39) en liaison de données avec le dispositif de réglage (36), avec lequel des données de mesure (38) sur la géométrie réelle de la pièce profilée allongée (1) sont recueillies, le dispositif de réglage (36) étant en liaison de données, en fonction d'une comparaison des données de mesure (38) avec des données prédéterminées (37) sur la géométrie de consigne de la pièce profilée allongée (1), avec le dispositif de recoupe (14) pour changer la ligne de coupe (21, 22) du dispositif de rognage (14), afin de compenser les déviations de la géométrie réelle par rapport à la géométrie de consigne spécifiée de la pièce profilée allongée (1).
